# EUROPEAN PATENT APPLICATION

(11) **EP 0 689 992 A1**
(43) Date of publication of application: **03.01.1996**
(21) Application number: 95109765.8
(22) Date of filing: 23.06.1995
(51) Int. Cl.: B65B 9/13, B65B 21/24, B29C 63/42, B29C 53/50, B29C 37/04, B29C 65/74, B29C 65/18

(54) **Process for producing a container covered with a cylindrical heat shrinking film and apparatus for producing said container**

(30) Priority: 27.06.1994 JP 167453/94; 22.11.1994 JP 312462/94; 22.11.1994 JP 312463/94; 25.11.1994 JP 290281/94
(71) Applicant: Sumitomo Bakelite Company Limited, Shinagawa-ku, Tokyo 140 (JP)
(72) Inventor: Sukeyasu, Ryuzo, c/o Sumitomo Bakelite Co., Ltd., 2-chome, Shinagawa-ku, Tokyo 140 (JP); Kanemaru, Hiroshi, c/o Sumitomo Bakelite Co., Ltd., 2-chome, Shinagawa-ku, Tokyo 140 (JP); Inomoto, Kiyoshi, c/o Sumitomo Bakelite Co., Ltd., 2-chome, Shinagawa-ku, Tokyo 140 (JP); Fujita, Masaaki, c/o Sumitomo Bakelite Co., Ltd., 2-chome, Shinagawa-ku, Tokyo 140 (JP)
(74) Representative: Türk, Gille, Hrabal, Leifert

(57) **Abstract**

A process for producing a container covered with a cylindrical heat shrinking film comprises preparing a continuous double layer sheet of a heat shrinking film by folding a continuous single layer sheet (22) supplied from a roll (21), sealing the open side of the continuous double layer sheet by heat, cutting the continuous double layer sheet to form a cylindrical heat shrinking film (1) having two open ends, disposing the cylindrical heat shrinking film around periphery of a container in an upright condition after moving past outside of floats (3,4), cutting and sealing an upper part of the film by heat to a shape of an arc (11) without removing the film from the container to form a heat shrinking bag film, pulling down the film until the sealed part is brought into contact with top of the container, allowing a lower part of the film to shrink by partial heating to bring the heated part tightly into contact with bottom of the container, and heating the whole film to bring approximately the whole film tightly in contact with the whole container while the container is kept in the upright condition. An apparatus for the process is also disclosed. A packaging line can be remarkably improved because the cylindrical heat shrinking film can be produced in the line. Shrinking ratio of the film can be decreased because a film of a size close to the container can be easily used. Appearance of the product container can be kept the same on all sides because the container can be transferred in an upright condition. Deformation of characters and patterns printed on the film can be avoided. Therefore, a container covered with a heat shrinking film of beautiful appearance can be produced efficiently.

## Description

### FIELD OF THE INVENTION

The present invention relates to a process for producing a container covered with a cylindrical heat shrinking film, such as a heat shrinking label, and an apparatus for producing said container. More particularly, the present invention relates to a process for producing a container covered with a cylindrical heat shrinking film by which a cylindrical heat sealing film having a circumferential length close to the peripheral length of the container is produced in the production line, disposed efficiently around periphery of the container, sealed by heat at an upper part thereof to a shape of an arc fitting the shape of a top part of the container, and then allowed to shrink by heat, the cylindrical heat shrinking film can perfectly fit the container after the film is allowed to shrink by heat, and a packaging container having a beautiful appearance can be produced. The present invention also relates to an apparatus for producing said container.

### PRIOR ART OF THE INVENTION

In recent years, heat shrinking films have been widely used for packaging of foods, sundry goods, toys, industrial products, and the like, because of the progress in the packaging technology. Particularly, technology of covering outer surfaces of containers with heat shrinking films is widely used. This technology is used for preventing fouling by dusts, for using printed heat shrinking films as labels, for assuring that containers have not been opened by covering containers with films, for preventing leaking of contents by fixing caps to containers, and for other like purposes. Shrink labels and cap seals are popularly used because processes using them for producing containers can be made remarkably simpler than those using adhesive labels. However, a heat shrinking film which is formed to a cylindrical shape in advance is necessary for using a shrink label or a cap seal. In conventional processes, a cylindrical heat shrinking film is prepared at a place different from that of packaging, and the prepared film is transported to the place of packaging for use. For forming a heat shrinking film into a cylindrical shape, an adhesive material has generally been used.

In conventional processes, films are generally cut and sealed continuously by using a rotating blade of a ring shape and a receiver. This process for cutting and sealing has a drawback in that the amount of heat transfer is limited because the rotating blade of a ring shape makes contact with the film only in a very small area, and the process can be applied only to thin films. Furthermore, speed of the processing is limited, and productivity cannot be increased.

According to conventional processes in which cylindrical heat shrinking films are purchased or prepared separately, costs for processing, transportation, and storage arise and material cost of the film cannot be reduced. Conventional processes have another drawback in that a large space is required for introducing the film into a production line because a paper tube having an inner diameter as large as 10 to 15 inches is generally used for a cylindrical heat shrinking film.

To cover a container with a heat shrinking film in conventional processes, an end of a cylindrical heat shrinking film is generally closed by heat sealing, and a container is inserted into the cylindrical heat shrinking film at the other end of the film. To prevent shift of relative positions of the cylindrical heat shrinking film and the container, the container and the film in combination are laid horizontally, and transferred to a heating apparatus in this condition. After the combination has been heat treated to allow shrinking of the film, the part of the cylindrical heat sealing film lower in the horizontally laid condition showed inferior appearance. Furthermore, automation of the process after the product has passed through the whole heating apparatus is difficult because the container is transferred in a horizontally laid condition.

When a heat shrinking film of a shape of a rectangular bag prepared by cutting and sealing one end by heat to a straight shape is used, the film does not sufficiently fit the top part of the container after heat shrinking. After heat shrinking of the film, corner parts of the rectangular shape remain as small protrusions, and appearance of the container is adversely affected. To solve this problem, heat shrinking films having an end sealed in a shape of an arc which fits the shape of the top part of a container have increasingly been adopted. Heretofore, the process for cutting and sealing an end of a cylindrical heat shrinking film by heat in a shape of an arc which fits the shape of the top part of a container has been conducted separately from the process line which covers the container with the film by shrinking.

In the process of covering outer surfaces of a container with a cylindrical heat shrinking film, a cylindrical heat shrinking film must have a large heat shrinking ratio in order to fit the container well when the circumferential length of the cylindrical heat shrinking film covering the container is excessively larger than the outer peripheral length of the container. When the cylindrical heat shrinking film has printing on the surface thereof, large deformation on the printing occurs, to cause serious deterioration in commercial value of the container. Because of this problem, it is necessary that the circumferential length of the cylindrical heat shrinking film be made close to the outer peripheral length of the container and the heat shrinking ratio be kept as small as possible.

However, in the conventional processes described above, air trapped in the space between the cylindrical heat shrinking film and the container cannot escape when the clearance between the cylindrical heat shrinking film and the container is small because the cylindrical heat shrinking film has been formed into a shape of a bag, and it is not easy that the outside face of the container is smoothly covered with the cylindrical heat shrinking film.

To solve the problems described above, development of a process for producing a container covered with a cylindrical heat shrinking film by which a cylindrical heat shrinking film having a circumferential length different from the length of the outermost periphery of the container only in a small amount can be efficiently disposed around periphery of the container and the container is easily covered with the film by allowing the film to shrink, has been desired.

### SUMMARY OF THE INVENTION

Accordingly, the present invention has an object to provide a process for producing a container covered with a cylindrical heat shrinking film by which the problems described above are solved and a cylindrical heat shrinking film having a circumferential length different from the length of the outer periphery of the container in a small amount can be efficiently disposed around periphery of the container, as well as an apparatus for producing said container.

The present invention has still another object to provide a process for producing a packaging container having excellent appearance continuously with automation as well as an apparatus therefor by providing a process for producing a cylindrical heat shrinking film which has a high speed of processing, is simple in the construction, and can be connected to the packaging process by heat shrinking in the process line, as well as an apparatus therefor.

As the result of extensive studies undertaken by the present inventors to achieve the objects described above, it was discovered that a cylindrical heat shrinking film can easily cover the outside face of a container by cutting a cylindrical heat shrinking film to a length sufficient for covering the container, opening the film by floats, inserting the container into the film, cutting and heat sealing an upper part of the film by heat to a shape of an arc, allowing a lower part of the film alone to shrink by heating, and then allowing the whole film to shrink. The present invention has been completed on the basis of the discovery.

Thus, the present invention comprise:
[1] a process for producing a container covered with a cylindrical heat shrinking film which comprises transferring a container intermittently to a horizontal direction by a one-pitch movement, disposing a cylindrical heat shrinking film around periphery of the container, holding the cylindrical heat shrinking film at a specific position in relation to the container, and allowing the cylindrical heat shrinking film to shrink by heating, wherein
   the process of disposing a cylindrical heat shrinking film around periphery of the container comprises
   (1) a stage which comprises transferring a continuous cylindrical heat shrinking film by film transfer rollers past outside of a first float which is held by the film transfer rollers, transferring the continuous cylindrical heat shrinking film by the film transfer rollers to a position at an outside of a second float which is held by film transfer belts, cutting the continuous cylindrical heat shrinking film with a cutter disposed at a position between the first float and the second float, transferring a cylindrical heat shrinking film produced by the cutting and opened by the second float by the film transfer belts, and disposing the cylindrical heat shrinking film at a position around periphery of the container which has been transferred to a position directly under the second float by a one-pitch movement,
   (2) a stage which comprises pulling up the cylindrical heat shrinking film by a chuck for pulling up a film, and
   (3) a stage which comprises forming a heat shrinking bag film by cutting and sealing an upper part of the cylindrical heat shrinking film by heat in a shape of an arc with a sealer cutter;
      the process of holding the cylindrical heat shrinking film at a specific position in relation to the container comprises
   (4) a stage which comprises pulling down the heat shrinking bag film by rollers for pulling down a film until the sealed part of the heat shrinking bag film is brought in contact with an upper part of the container, and
   (5) a stage which comprises bringing a lower part of the heat shrinking bag film tightly in contact with a bottom part of the container by allowing the film to shrink by heating the lower part of the film alone; and
      the process of allowing the cylindrical heat shrinking film to shrink by heating comprises
   (6) a stage which comprises bringing the whole part of the heat shrinking bag film tightly in contact with approximately the whole surface of the container by heating the whole part of the heat shrinking bag film;
[2] a process for producing a container covered with a cylindrical heat shrinking film described in [1], wherein the continuous cylindrical heat shrinking film is produced and supplied continuously by a process comprising
   (a) folding a continuous sheet of a heat shrinking film supplied from a roll continuously to make a double layer sheet,
   (b) moving the double layer sheet continuously,
   (c) clamping the double layer sheet at an initial position with a film clamp and a clamp receiver which both make a reciprocal movement,
   (d) sealing an open side of the double layer sheet and cutting the remaining edge of the double layer sheet by heat while a linear heat sealing bar, the film clamp, and the clamp receiver move to a final position in a manner synchronized with the movement of the double layer sheet,
   (e) releasing the double layer sheet from the film clamp and the clamp receiver, and
   (f) returning the heat sealing bar, the clamp, and the clamp receiver to the initial position;
[3] a process for producing a container covered with a cylindrical heat shrinking film described in [2], wherein the remaining edge of the double layer sheet formed in the process (d) is detached from the double layer sheet by an upward or downward movement of a scrap receiver having an opening with suction, immediately before the heat sealing bar, the film clamp, and the clamp receiver reach the final position;
[4] a process for producing a container covered with a cylindrical heat shrinking film described in [1], wherein, in the process of disposing the cylindrical heat shrinking film at a position around periphery of the container in stage (1), an upper part of the container is inserted into the cylindrical heat shrinking film opened by the second float by pushing up the container with a plunger;
[5] a process for producing a container covered with a cylindrical heat shrinking film described in [1], wherein the process for producing a container covered with a cylindrical heat shrinking film further comprises forming a small vent hole at an upper part of the heat shrinking bag film and forming a perforation for removing the film at a lower part of the heat shrinking bag film;
[6] a process for producing a container covered with a cylindrical heat shrinking film described in [1], wherein, in stage (3), the cylindrical heat shrinking film is held between a film holding plate and a receiving plate which face each other, and cut and sealed by heat to a shape fitting the shape of a top part of the container with a heat cutting and sealing blade having a shape of an arc fitting the shape of the top part of the container;
[7] a process for producing a container covered with a cylindrical heat shrinking film described in [6], wherein a scrap piece formed by the cutting and sealing of the film by heat is clamped and detached by an apparatus for detachment and removed by suction or air blowing, simultaneously with the cutting and sealing of the film by heat;
[8] a process for producing a container covered with a cylindrical heat shrinking film described in [1], wherein stage (1) comprises transferring the container to a position directly under the second float in an upright condition, stage (4) comprises extending a lower part of the heat shrinking bag film from a bottom part of the container when the heat shrinking bag film is pulled down until the sealed part of the heat shrinking bag film is brought in contact with an upper part of the container, stage (5) comprises allowing the lower part of the heat shrinking bag film extended from the bottom part of the container alone to shrink by a partial heating apparatus, and stage (6) comprises allowing the whole part of the heat shrinking bag film to shrink completely by heating the whole part of the heat shrinking bag film while the container is held in the upright condition;
[9] an apparatus for producing a container covered with a cylindrical heat shrinking film which comprises film transfer rollers which transfer a continuous cylindrical heat shrinking film to a second float, a first float which is held by the film transfer rollers, a film cutter which cuts the continuous cylindrical heat shrinking film, film transfer belts which open and transfer a cylindrical heat shrinking film prepared by the cutting to periphery of a container, the second float which is held by the film transfer belts, a chuck for pulling up a film which pulls up the cylindrical heat shrinking film, a sealer cutter which cuts and seals an upper part of the cylindrical heat shrinking film by heat to a shape of an arc and forms a heat shrinking bag film, rollers for pulling down a film which pull down the cylindrical heat shrinking film and bring the heat sealed part of the heat shrinking bag film into contact with an upper part of the container, a partial heating apparatus which heats a lower part of the heat shrinking bag film alone to allow the heat shrinking bag film to shrink and brings the film tightly into contact with a bottom part of the container, and a heating apparatus which heats the whole part of the container to allow the whole part of the heat shrinking bag film to shrink and brings approximately the whole film tightly into contact with the container;
[10] an apparatus for producing a container covered with a cylindrical heat shrinking film described in [9], wherein the apparatus for producing a container further comprises, before the elements described in Claim 9,
   (a) a mechanism for folding a continuous sheet of a heat shrinking film supplied from a roll continuously to make a double layer sheet,
   (b) a mechanism for moving the double layer sheet continuously,
   (c) a mechanism for clamping the double layer sheet at an initial position with a film clamp and a clamp receiver which both make a reciprocal movement,
   (d) a mechanism for sealing an open side of the double layer sheet and cutting the remaining edge of the double layer sheet by heat while a linear heat sealing bar, the film clamp, and the clamp receiver move to a final position in a manner synchronized with the movement of the double layer sheet,
   (e) a mechanism for releasing the double layer sheet from the film clamp and the clamp receiver, and
   (f) a mechanism for returning the heat sealing bar, the clamp, and the clamp receiver to the initial position;
[11] an apparatus for producing a container covered with a cylindrical heat shrinking film described in [10], wherein the apparatus for producing a container comprises a scrap receiver having an opening with suction which detaches the remaining edge of the double layer sheet formed by cutting the double layer sheet with the mechanism (d) by an upward or downward movement immediately before the heat sealing bar, the film clamp, and the clamp receiver reach the final position;
[12] An apparatus for producing a container covered with a cylindrical heat shrinking film described in [9], wherein the sealer cutter holds the cylindrical heat shrinking film between a film holding plate and a receiving plate which face each other, and cuts and seals by heat to a shape fitting the shape of a top part of the container with a heat sealing blade having a shape of an arc fitting the shape of the top part of the container;
[13] an apparatus for producing a container covered with a cylindrical heat shrinking film described in [12], wherein the sealer cutter further comprises an apparatus for detachment which clamps and detaches a scrap piece formed by the cutting and sealing of the film by heat and removes the scrap piece by suction or air blowing, simultaneously with the cutting and sealing of the film by heat;
[14] an apparatus for producing a container covered with a cylindrical heat shrinking film described in [12], wherein the film holding plate for holding the cylindrical heat shrinking film and the heat sealing blade are disposed on the same base plate which is moved by a cylinder;
[15] an apparatus for producing a container covered with a cylindrical heat shrinking film described in [12], wherein the heat sealing blade is fixed to a supporting block in which a heater for heating the heat sealing blade is disposed in a form buried therein;
[16] an apparatus for producing a container covered with a cylindrical heat shrinking film described in [12], wherein the film holding plate has an apparatus for cooling; and
[17] an apparatus for producing a container covered with a cylindrical heat shrinking film described in [12], wherein the receiving plate which is faced to the film holding plate and the heat sealing blade has rubber, paper, or teflon attached to the surface thereof.

Other and further objects, features and advantages of the invention will appear more fully from the following description.

### BRIEF DESCRIPTION OF THE DRAWINGS

The invention will be described with reference to the accompanying drawings, wherein:
Figure 1 is a schematic illustration showing an example of the process and the apparatus of the present invention.
Figure 2(a) is a front view of a mode of floats used in the process of the present invention. Figure 2(b) is a side view of another mode of floats used in the process of the present invention.
Figure 3 is a partial sectional view showing a mode of a sealer cutter.
Figure 4 is a front view of a mode of a film holding plate and a heat cutting and sealing blade.
Figure 5 is an illustration showing the condition in which a heat shrinking bag film is pulled down until the lower end of the film comes to the position of the bottom of a container.
Figure 6 is an illustration showing the condition in which the part of a heat shrinking bag film sealed to a shape of an arc is brought into contact with the top of a container.
Figure 7 is a side view of a mode of a mechanism for cutting and heat sealing by heat used in the present invention.
Figure 8 is a front view of a mode of a mechanism for cutting and sealing by heat used in the present invention.

The numbers in the figures have the meanings as listed in the following:
- 1:: a continuous cylindrical heat shrinking film
- 2:: a film transfer roller
- 3:: a first float
- 4:: a second float
- 5:: a film transfer belt
- 6:: a roller for a film transfer belt
- 7:: a film cutter
- 8:: a cylindrical heat shrinking film formed by the cutting operation
- 9:: a plunger
- 10:: a chuck for pulling up a film
- 11:: a cut and sealed part having a shape of an arc
- 12:: a piece of scrap
- 13:: a roller for pulling down a film
- 14:: a heating apparatus
- 15:: a shrink tunnel
- 16:: a container
- 17:: a heat shrinking bag film
- 18:: an apparatus for pulling down a film
- 19:: an apparatus for pushing up a container
- 21:: a roll of a material sheet
- 22:: a heat shrinking film
- 23:: a triangle plate
- 24:: an in-line sealer
- 25:: an apparatus for forming a small hole
- 26:: an apparatus for forming a perforation
- 31:: an apparatus for clamping a container
- 32:: an apparatus for clamping a film
- 33:: a pressing spring
- 34:: a film holding plate
- 35:: a heat cutting and sealing blade
- 36:: a receiving plate
- 37:: a base plate
- 38:: a cylinder
- 39:: a supporting block
- 40:: a heater
- 41:: an inlet-outlet for cooling water
- 42:: a ditch for cooling water
- 43:: a pressing spring
- 44:: an apparatus for detachment
- 51:: a film clamp
- 52:: a heat sealing blade
- 53:: a heat sealing bar
- 54:: a clamp receiver
- 55:: an arm
- 56:: a film guide
- 57:: a cylinder for detachment
- 58:: a scrap receiver

### DETAILED DESCRIPTION OF THE INVENTION

The present invention is described in detail in the following.

Material and shape of the container which can be covered with a cylindrical heat shrinking film according to the present invention are not particularly limited. As for the material, a container made of glass, metal, ceramics, plastics, or the like, can be used. As for the shape, a container having a shape of a cylinder, an elliptic cylinder, a square cylinder, a tube, or the like, can be used. Content of the container is not particularly limited. A container containing liquid, viscous fluid, paste, powder, granules, particles, or the like, can be used.

Type of the heat shrinking film used in the present invention is not particularly limited. For example, a film formed by extrusion from a T-die, followed by treatment with biaxial stretching immediately thereafter or in a later step, a film stretched by an inflation processing apparatus, or the like film, can be used. Material of the heat shrinking film is not particularly limited. For example, polyethylene, polypropylene, polystyrene, vinyl chloride resin, polyethylene terephthalate, polybutylene terephthalate, polyamide, or the like, can be used. Multilayer films formed by laminating different types of resin can also be used. The heat shrinking film used in the present invention is preferably an unbalancial film which has a heat shrinking ratio to the transverse direction higher than that to the longitudinal direction. A heat shrinking film having a heat shrinking ratio to the transverse direction of 20 to 60 % and a heat shrinking ratio to the longitudinal direction of 0 to 30 % is particularly preferable. Thickness of the heat shrinking film used in the present invention is not particularly limited, and, in general, a film having a thickness of about 10 to about 200 µm, preferably about 10 to about 100 µm, can be used. Characters, patterns, or the like, may be printed on the heat shrinking film in advance, if necessary.

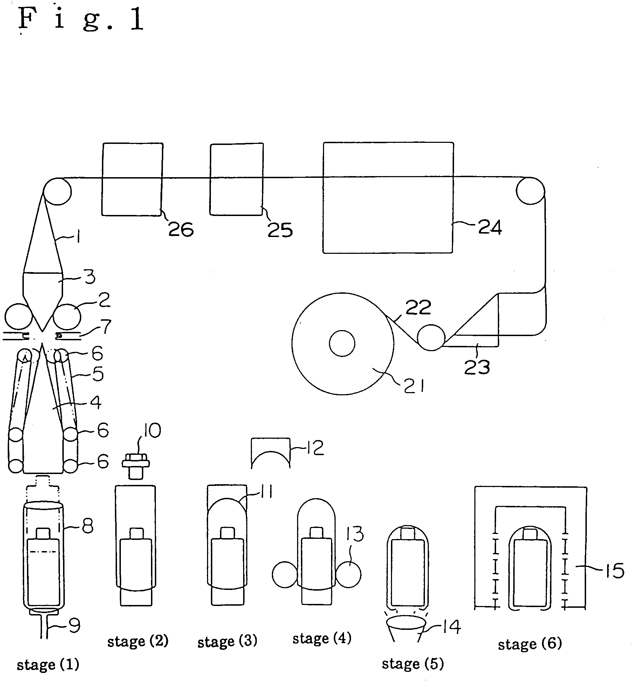

The present invention is described with reference to the accompanying drawings in the following. Figure 1 is a schematic illustration showing an example of the process and the apparatus of the present invention.

In stage (1) of the present invention, a first float which is held by film transfer rollers and a second float which is held by film transfer belts are used. A plunger for pushing up a container may also be used.

In the process of the present invention, a continuous cylindrical heat shrinking film 1 is transferred past the outside of a first float 3 which is held by a pair of film transfer rollers 2. The first float is contained at the inside of the cylindrical heat shrinking film. The cylindrical heat shrinking film is transferred to the outside of a second float 4 by the film transfer rollers in the condition in which the lower end of the film is kept open. The second float is contained at the inside of the cylindrical heat shrinking film. The second float is held by a pair of film transfer belts 5. The film transfer belt is driven by a plural pair of rollers for a film transfer belt 6. It is preferable that rollers for a film transfer belt disposed at the highest position have such a structure that the rollers can be moved horizontally to open or close the film transfer belts. By this structure, the film transfer belts can be opened when the cylindrical heat shrinking film is transferred from the first float, and the second float can surely receive the cylindrical heat shrinking film. In Figure 1, the broken lines show the condition in which the film transfer belts are closed, and the solid lines show the condition in which the film transfer belts are opened. After the second float has received the cylindrical heat shrinking film, the film transfer belts are closed, and the cylindrical heat shrinking film is pulled down by a length necessary for covering a container by driving the film transfer belts.

Length of the cylindrical heat shrinking film necessary for covering a container is preferably longer than the total height of the container generally by 20 to 60 mm. Difference between the circumferential length of the cylindrical heat shrinking film used in the present invention and the outermost peripheral length of the container is 1 to 100 mm, preferably 5 to 70 mm, and more preferably 10 to 40 mm.

In the present invention, because the cylindrical heat shrinking film opened by the second float is disposed around periphery of the container, the cylindrical heat shrinking film can be surely disposed around periphery of the container even when the difference between the circumferential length of the cylindrical heat shrinking film and the outermost peripheral length of the container is decreased. However, when the difference between the circumferential length of the cylindrical heat shrinking film and the outermost peripheral length of the container is less than 1 mm, it is difficult to transfer the cylindrical heat shrinking film around periphery the container from the second float, and this condition is not preferable. When the difference between the circumferential length of the cylindrical heat shrinking film and the outermost peripheral length of the container is more than 100 mm, position of the cylindrical heat shrinking film in relation to the container may be shifted, or when the cylindrical heat shrinking film has a printing thereon, printed characters and patterns may be deformed because of a larger shrinking ratio by heating. Thus, this condition is not preferable.

In the process of the present invention, the cylindrical heat shrinking film which has been pulled down by the length necessary for covering the container is then cut by a film cutter 7 disposed at a position between the first float and the second float. Because both ends of the cylindrical heat shrinking film thus obtained after the cutting are open, the cylindrical heat shrinking film can be disposed around periphery of the container far more easily than cylindrical heat shrinking films according to conventional technologies in which an end alone is open and the other end is closed. It is preferable in the process of the present invention that the lower part of the second float has a sectional shape similar to the shape of the largest section of the container which is to be covered by the film in order to achieve sure and easy disposition of the cylindrical heat shrinking film around periphery of the container. When the container 16 is transferred to a position directly under the second float by a one-pitch movement, the cylindrical heat shrinking film 8 which has been cut and held by the second float and the film transfer belts in the open condition is disposed around periphery of the container by driving the film transfer belts.

In the process of the present invention, the upper part of the container can be inserted into the open cylindrical heat shrinking film by pushing up the container with a plunger 9 which is disposed directly under the second float. In Figure 1, the container at a pushed up position is indicated by the broken lines. The disposition of the cylindrical heat shrinking film around periphery of the container can be made more surely by pushing up the container with the plunger.

In the process of the present invention, the container having the cylindrical heat shrinking film disposed around periphery thereof in stage (1), is transferred to stage (2) by the one-pitch movement. While the container is transferred, the cylindrical heat shrinking film is kept at the specified position without causing shift in the position in relation to the container because the difference between the circumferential length of the cylindrical heat shrinking film and the outermost peripheral length of the container is small. In stage (2), the upper end of the cylindrical heat shrinking film which has been cut in stage (1) is held by a chuck for pulling up a film 10, and pulled up to a position suitable for cutting and sealing of the upper part of the film by heat. Shape and structure of the chuck for pulling up a film can be suitably selected according to necessity, and any shape and structure can be used without particular restriction so long as the chuck can hold and pull up the film.

In the process of the present invention, the container having the cylindrical heat shrinking film held at the pulled up position in stage (2) is transferred to stage (3) by the one-pitch movement. In stage (3), the upper part of the cylindrical heat shrinking film is cut and sealed by heat to a shape of an arc with a sealer cutter which is not shown in the figure, and a heat shrinking bag film is formed. (A cylindrical heat shrinking film having one sealed end and one open end, such as the film obtained in this stage, is referred to as a heat shrinking bag film.) By forming a part which is cut and sealed by heat to a shape of an arc 11 at the upper part of the cylindrical heat shrinking film, the heat shrinking bag film thus formed has smaller excess portions after shrinking by heat than a heat shrinking bag film having an upper part which is cut and sealed by heat to a straight shape, and more beautiful appearance can be obtained. Radius of the arc of the cut and sealed part can be suitably selected according to the shape of the upper part of the container. It is not necessary that the shape of the cut and sealed part is strictly a part of a circle, but any curved shape can be selected according to the shape of the upper part of the container.

In the process of the present invention, a scrap piece 12 formed by the cutting and sealing by heat in stage (3) can be held by a conventional mechanism and transferred to a disposal system.

In the process of the present invention, it is also possible that the cutting and the sealing of the upper part of the cylindrical heat shrinking film are not conducted simultaneously, but in two separate stages. However, simultaneous cutting and sealing in a single stage is generally possible, and is more economical.

In the process of the present invention, the container holding the cylindrical heat shrinking film which has been cut and sealed at the upper part thereof to a shape of an arc in stage (3) (the heat shrinking bag film) is transferred to stage (4) by the one-pitch movement. In stage (4), the heat shrinking bag film is pulled down by a pair of rollers for pulling down a film 13 until the cut and sealed part of the film is brought into contact with the top part of the container. In the condition in which the cut and sealed part of the film is brought into contact with the top part of the container, the lower end of the heat shrinking bag film extends from periphery of the bottom part of the container. It is preferred that length of the heat shrinking bag film extending from periphery of the bottom part of the container is 5 mm or more and less than the length which covers the whole area of the bottom part of the container when the lower part of the heat shrinking bag film is allowed to shrink by healing. This length is preferably 10 to 15 mm. When the length of the heat shrinking bag film extending from periphery of the bottom part of the container is less than 5 mm, there is possibility that, when the lower part of the heat shrinking bag film is allowed to shrink by heating, the shrunk film does not tightly adhere to the bottom part of the container, and a length less than the specified value is not preferable. When the length of the heat shrinking bag film extending from periphery of the bottom part of the container is too large and the film covers the whole area of the bottom part of the container after the film is allowed to shrink by heating, the shrunk film is not efficiently removed when content of the container is used, and a length more than the specified length is not preferable. The upper limit value of the length of the heat shrinking bag film extending from periphery of the bottom part of the container is decided according to size and shape of the container.

In the process of the present invention, the container having the heat shrinking bag film in the condition in which the heat shrinking bag film is pulled down until the cut and sealed part of the film is brought into contact with the top part of the container is transferred to stage (5) by the one-pitch movement. In stage (5), the bottom part of the container is heated by a heating apparatus 14. The part of the heat shrinking bag film at the periphery of the bottom part of the container and the part of the same film extending from the periphery of the bottom part of the container are allowed to shrink and adhere tightly to the bottom part of the container. Thus, the position of the heat shrinking bag film relative to that of the container is fixed to the specified position and, at the same time, shift of the position during shrinking of the whole heat shrinking bag film in stage (6) can be prevented. Method of heating of the bottom part of the container in stage (5) is not particularly limited, and a suitable method of heating, such as heating with irradiation from a heater, heating with an infrared lamp, or the like, can be used.

In the process of the present invention, the container having the lower part of the heat shrinking bag film adhered tightly to the bottom part in stage (5), is transferred to stage (6). In stage (6), the whole container is heated by passing through a shrink tunnel 15. The whole heat shrinking bag film is allowed to shrink, and covers the container by making contact tightly thereto. Method of heating for allowing the whole heat shrinking bag film to shrink is not particularly limited so long as the method can provide an atmosphere which uniformly heats approximately the whole surface of the container. A suitable method can be selected according to size and shape of the container, material and properties of the heat shrinking film, and the like. For example, the heating can be conducted by blowing hot air to the whole surface, by heating with a uniform irradiation from a heated body, or the like.

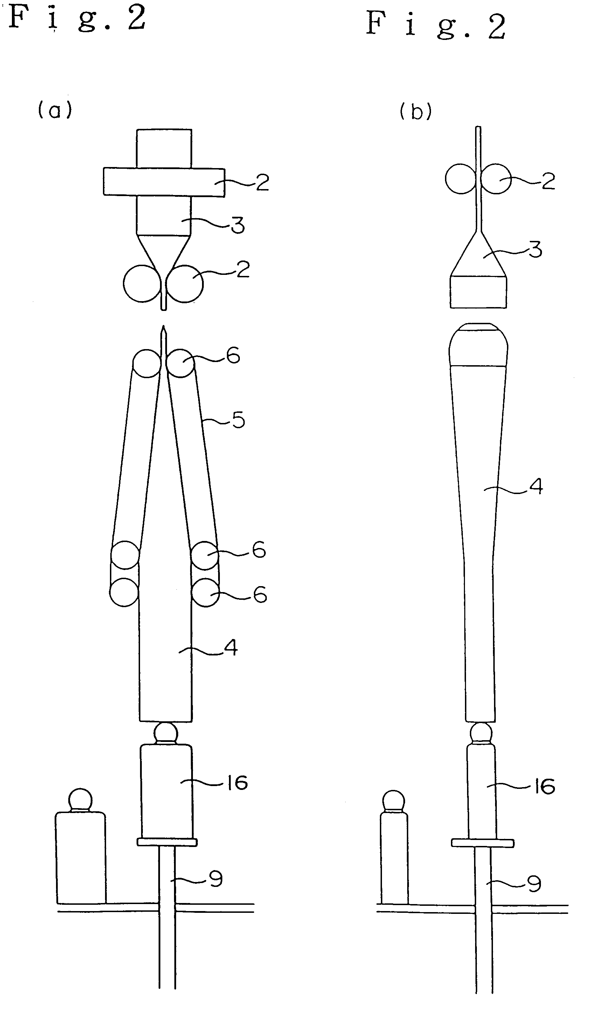

In stage (1) of the process of the present invention, the first float and the second float of various shapes can be used. Figure 2(a) is a front view of a mode of floats used in the process of the present invention. Figure 2(b) is a side view of another mode of floats used in the process of the present invention. In the second float shown in Figure 2, the upper edge of the float is formed to a curved shape, and the lower part of the float has a shape extending from lower ends of the film transfer belts. The cylindrical heat shrinking film can be transferred more smoothly past the float when the float have this shape.

A sealer cutter which cuts and seals the upper part of the cylindrical heat shrinking film by heat to the shape of an arc in stage (3) of the process of the present invention is described in the following.

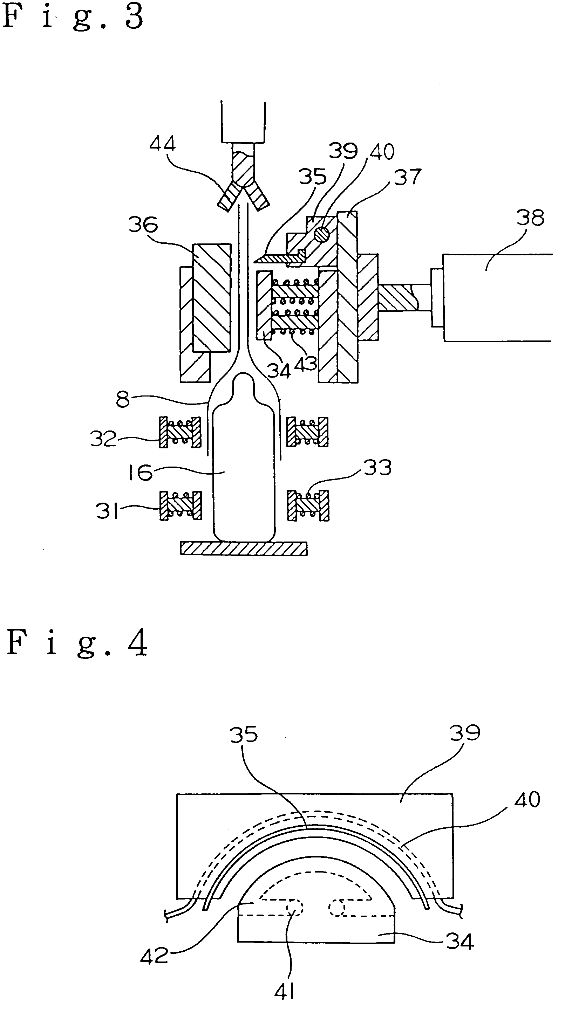

Figure 3 is a partial sectional view showing a mode of the sealer cutter. The container 16 is fixed at a specified position by an apparatus for clamping a container 31 which holds a lower part of the container from both sides. The cylindrical heat shrinking film 8 which has been pulled up is fixed to a specified position by an apparatus for clamping a film 32 which presses a lower part of the film to the surface of the container from both sides. Pressing springs 43 may be attached to the apparatus for clamping a container and the apparatus for clamping a film.

At an upper part of the cylindrical heat shrinking film which has been pulled up, a film holding plate 34 and a heat cutting and sealing blade 35 having a shape of an arc are disposed to one side of the film, and a receiving plate 36 is disposed to the other side of the film. The film holding plate and the heat cutting and sealing blade having a shape of an arc can be disposed on the same base plate 37. The base plate on which the film holding plate and the heat cutting and sealing blade having a shape of an arc are disposed can be moved reciprocally, for example, by using a cylinder 38. The receiving plate may be disposed at a fixed position or moved reciprocally by using a cylinder or the like. The object of the present invention can generally be achieved by disposing the receiving plate at a fixed position and moving the film holding plate and the heat cutting and sealing blade. The heat cutting and sealing blade having a shape of an arc is fixed to a supporting block 39. A heater 40 is disposed in the supporting block in a form buried therein, and used for heating the heat cutting and sealing blade. An apparatus for cooling may be attached to the film holding plate, if necessary.

Figure 4 is a front view of a mode of the film holding plate and the heat cutting and sealing blade. A heat cutting and sealing blade 35 of a shape of an arc is fixed to a supporting block 39 having a lower edge of a shape of an arc. In the supporting block, a heater 40 indicated by broken lines which is used for heating the heat cutting and sealing blade is disposed in a form buried in the supporting block. Under the heat cutting and sealing blade, a film holding plate 34 is disposed. The film holding plate has an upper edge of a shape of an arc, and holds the cylindrical heat shrinking film by pressure at the part of the film close to the part 11 which is heat cut and sealed in a shape of an arc. In the film holding plate, an inlet-outlet for cooling water 41 and a ditch for cooling water 42 which are shown by broken lines are formed in order that the heat shrinking film is cooled to prevent shrinking of the heat shrinking film when the cylindrical heat shrinking film is clamped.

The heat cutting and sealing blade and the film holding plate can be formed into a fixed single structure by disposing the supporting block 39 to which the heat cutting and sealing blade 35 is fixed and the film holding plate 34 on the same base plate 37. The single structure comprising the heat cutting and sealing blade and the film supporting plate is pushed toward the cylindrical heat shrinking film with a cylinder and the film holding plate is pressed to the receiving plate with pressing springs 43. Thus, the cylindrical heat shrinking film is held between the film holding plate and the receiving plate, and simultaneously cut and sealed by heat with the heat cutting and sealing blade of a shape of an arc which is pushed forward. Heating for the cutting and sealing by heat is made only locally, and the shrinking property of the heat shrinking film is not adversely affected. Therefore, beautiful shrink packaging of a container can be achieved.

In the present invention, an elastic material having a relatively high modulus, such as rubber, paper, teflon, or the like, may be attached to the surfaces of the film holding plate and the receiving plate which is faced to the heat cutting and sealing blade so that the heat shrinking film can be held and cut and sealed by heat more surely by the cushioning effect of the material.

Shape of the heat cutting and sealing blade of a shape of an arc used in the present invention can be selected suitably according to the shape of the top part of the container. For example, the shape may be a part of a circle, a smooth curve, or a combination of a plurality of curves which fits the shape of the top part of the container.

A scrap piece 12 formed by the cutting and sealing by heat at the outside of the cut part can be detached by clamping it with an apparatus for detachment 44 and removed by suction or air blowing.

In stage (4) of the present invention, the heat shrinking bag film is pulled down by rollers for pulling down a film 13 until the cut and sealed part by heat is brought into contact with the top part of the container. The same condition can also be achieved by pushing up the container by an apparatus for pushing up a container until the cut and sealed part of the film by heat is brought into contact with the top part of the container. The same condition can be achieved by still another process described in the following which comprises both the process of pulling down the heat shrinking bag film and the process of pushing up the container.

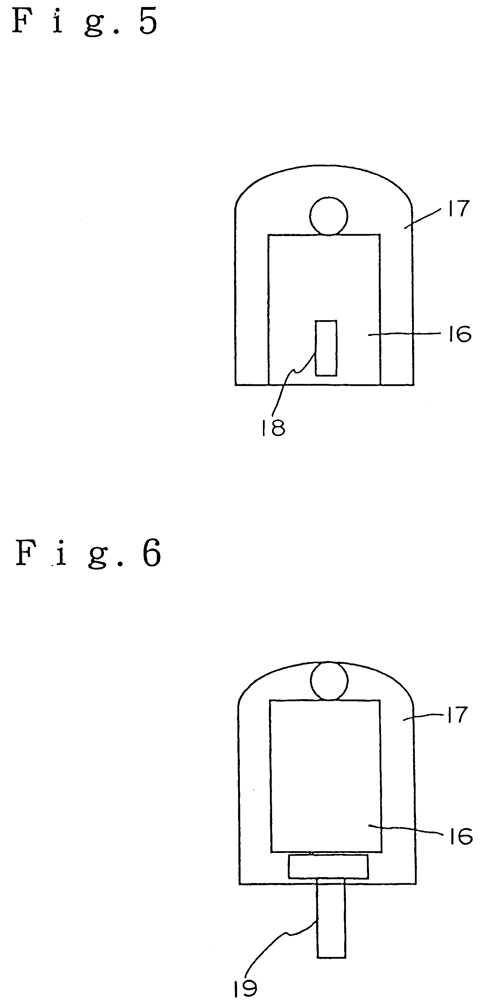

Figure 5 is an illustration showing the condition in which the heat shrinking bag film is pulled down until the lower end of the film comes to the position of the bottom of the container. The heat shrinking bag film 17 disposed around periphery of the container 16 is pulled down by the apparatus for pulling down a film 18 until the lower end of the film comes to the position of the bottom of the container. In the apparatus for pulling down a film, a pair of rollers for pulling down a film, suction pads which makes reciprocal movement, or the like, are used. When the heat shrinking bag film is pulled down until the lower end of the film comes to the position of the bottom of the container by the apparatus for pulling down a film, the film and the container are transferred in combination to the next stage by the one-pitch movement.

Figure 6 is an illustration showing the condition in which the part of the heat shrinking bag film sealed to a shape of an arc is brought into contact with the top of the container. While the heat shrinking bag film which has been pulled down until the lower end of the film comes to the position of the bottom of the container as shown in Figure 5 is held at the same position by using a chuck or the like, the container alone is pushed up by a plunger or an apparatus for pushing up a container 19, such as a pushing up plate of a length of about 100 to about 300 mm and a width of about 5 mm, and the top part of the container is brought into contact with the cut and sealed part of the heat shrinking bag film. The lower end of the heat shrinking bag film extends from periphery of the bottom part of the container in the resultant condition. When the process of pushing up the container is finished, the film and the container are transferred to the next stage (5) in combination by the one-pitch movement.

In the process of the present invention, a cylindrical heat shrinking film prepared by any process can be used. For example, a cylindrical film prepared by the inflation process may be used without an additional processing. A cylindrical film prepared from a single layer sheet of a film by a process of adhesion or heat sealing may also be used. A process for preparing a cylindrical heat shrinking film from a single layer sheet of a heat shrinking film and a process for covering a container with the cylindrical heat shrinking film can also be conducted as a combined continuous process. The film may have printings thereon and used as a label.

Figure 1 includes an illustration showing a mode of the process and the apparatus of the present invention in which a cylindrical heat shrinking film is prepared from a single layer sheet of a heat shrinking film. The film is supplied from a roll 21 of a single layer sheet of a heat shrinking film on which suitable printings are made. The single layer sheet of the heat shrinking film is continuously folded to make a double layer sheet by a triangle plate 23. The open end of the double layer sheet of the heat shrinking film prepared by folding is cut and sealed by heat with an in-line sealer to prepare a cylindrical heat shrinking film. Type of the in-line sealer is not particularly limited, and a suitable sealer, such as a heat sealer, an impulse sealer, a high frequency wave sealer, an ultrasonic wave sealer, or the like, can be used according to properties of the film used and speed of the processing. The cutting and sealing of the open end by heat may be conducted continuously or intermittently. The heat shrinking film which has been formed into a cylindrical form by the cutting and sealing of the open end is superior to a cylindrical heat shrinking film prepared by adhesion of the open end in that the former film has no part of an increased thickness formed by two layers for adhesion and has superior appearance.

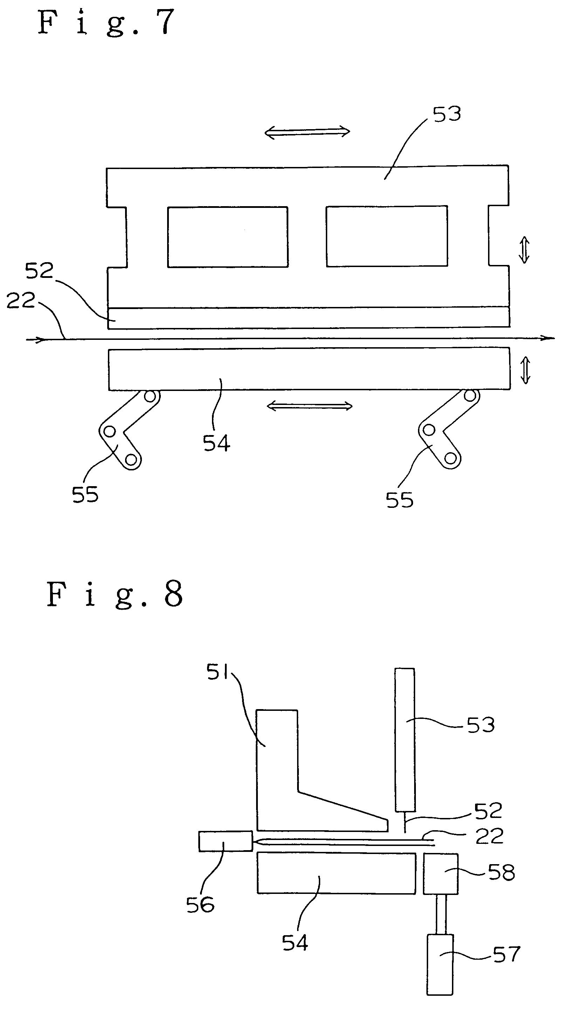

Figure 7 is a side view of a mode of the mechanism for cutting and sealing by heat used in the present invention. Figure 8 is a front view of a mode of the mechanism for cutting and sealing by heat used in the present invention. A film clamp 51, a heat sealing bar 53 equipped with a heat cutting and sealing blade 52 at the lower end thereof, and a clamp receiver 54 repeat a reciprocal movement to the direction the same with or opposite to the direction of the movement of the film and a reciprocal movement to the vertical directions by which the film is held or released, as shown by the arrows in Figure 7. The double layer sheet 22 of the heat shrinking film prepared by the folding moves from the left hand side to the right hand side in Figure 7 while it is held between a film clamp which is not shown in Figure 7 and the clamp receiver. At the left end in Figure 7 which is the initial position, the film clamp and the clamp receiver holds the heat shrinking film between them. At the same time, the heat sealing bar comes down, and presses the heat cutting and sealing blade to the open side of the double layer sheet of the heat shrinking film. The heat sealing bar, the film clamp, and the clamp receiver moves to the right end in Figure 7 which is the final position at a speed synchronized with the movement of the heat shrinking film. The heat shrinking film is sealed and cut by heat with the heat cutting and sealing blade while the combined system moves from the initial position to the final position. The movement of the heat sealing bar, the film clamp, and the clamp receiver described above can be, for example, achieved by converting the rotating movement of an arm 55 to a reciprocal movement. The process of the present invention in which the open end of the double layer sheet of the film is cut and sealed by heat with a heat cutting and sealing blade can keep the blade and the film in contact with each other for a longer time than a conventional process in which a film is cut and sealed by a rotating blade of a ring shape and a receiver which both make contact with the film only in a very small area. Therefore, according to the process of the present invention, cutting and sealing a film having a larger thickness by heat, which has been impossible by conventional processes, can be achieved easily. Furthermore, speed of the cutting and sealing by heat can be increased in a manner synchronized with the speed in the succeeding processes because the heat cutting and sealing blade moves along with the film, and the in-line production of the cylindrical heat shrinking film can be realized.

In the process of the present invention, the sealed film is released at the final position by an upward movement of the film clamp which holds the heat shrinking film until the film reaches the final position, an upward movement of the heat sealing bar which cuts and seals the film by heat in the corresponding period, and a downward movement of the clamp receiver. The heat sealing bar, the film clamp, and the clamp receiver return to the initial position while these elements are kept at respective positions after the upward or downward movement. When these elements return to the initial position, these elements again hold the film between them, and cut and seal the heat shrinking film by heat during the movement to the right in the same manner. When a sealing operation is temporarily stopped in the cutting and sealing by heat using a rotating blade of a ring shape, it is difficult to resume the sealing continuously after the pause. According to the process of the present invention, a cylindrical heat shrinking film of a beautiful appearance having a perfectly continuous sealing can be produced by adjusting the moving distance of the heat sealing bar between consecutive two cutting and sealing operations in such a manner that the cut and sealed line formed by the heat cutting and sealing blade in one operation slightly overlaps with that in the preceding operation.

In the process of the present invention, a film guide 56 is disposed at a side of the face where the film clamp and the clamp receiver make contact with each other. The film guide determines position of the open side of the double layer sheet of the heat shrinking film formed by the folding, and a cylindrical heat shrinking film having a constant width can always be produced. The remaining edge part which has been cut by the heat cutting and sealing blade is detached from the cylindrical heat shrinking film by a cylinder for detachment 57, and removed through a scrap receiver 58 having an opening with suction.

According to the process of the present invention, it is not necessary to supply a separately prepared cylindrical heat shrinking film. Instead, a roll of a continuous single layer sheet of a heat shrinking film can be used in the packaging line. A roll of a cylindrical heat shrinking film generally uses a paper tube having an inner diameter of 10 to 15 inches. On the other hand, a roll of a single layer sheet of a heat shrinking film generally used a paper tube having an inner diameter of about 3 inches. Therefore, the space occupied by the roll in the packaging line can be decreased. Furthermore, according to the process of the present invention, rationalization of the process to a large degree can be achieved because separate preparation, transportation, and storage of a cylindrical heat shrinking film is not necessary, and some auxiliary materials, such as paper tubes used only for a cylindrical heat shrinking film, are not required.

When the heat shrinking film which has been made into a cylindrical form by the in-line sealer is cut and sealed by heat at the upper part thereof in stage (3), a small vent hole is formed in the vicinity of the cut and sealed part at the upper part of the cylindrical heat shrinking film by an apparatus for forming a small hole 25. When the cylindrical heat shrinking film (the heat shrinking bag film) is pulled down by rollers for pulling down a film in stage (4), air is released through the small vent hole in the vicinity of the cut and sealed part, and the operation of pulling down the bag film is facilitated.

After a small vent hole is formed by the apparatus for forming a small hole, a perforation is formed on the cylindrical heat shrinking film. The perforation is formed by an apparatus for forming a perforation 26 in the lower end part of the heat shrinking bag film. The process of forming a perforation in the lower end part may be conducted before the process of forming a small vent hole in the vicinity of the cut and sealed part, or the process of forming a perforation in the lower end part and the process of forming a small vent hole in the vicinity of the heat cut and sealed part may be conducted simultaneously. Forming a perforation in the lower end part of the heat shrinking bag film is preferred because operation of opening the container covered with the shrunk film by a consumer is facilitated.

To summarized the advantages of the present invention, according to the process and the apparatus of the present invention, a container covered with a shrunk film which has a small shrinking ratio, shows no deformation of characters and patterns printed thereon, and exhibits excellent appearance can be efficiently produced because a cylindrical heat shrinking film having a circumferential length which is different from the peripheral length of the container in a small amount can be easily disposed around periphery of the container. Furthermore, automation of succeeding processes can be facilitated because the container can be transferred in an upright condition.

Also according to the process and the apparatus of the present invention, in-line production of a cylindrical heat shrinking film from a roll of a continuous single layer sheet of a heat shrinking film can be realized in the packaging line. Therefore, separate preparation, transportation, and storage of a cylindrical heat shrinking film is not necessary, and the process is rationalized to a large degree. Furthermore, according to the process and the apparatus of the present invention, a heat shrinking film having a larger thickness can be cut and sealed by heat at a high speed, and a cylindrical heat shrinking film having sealed parts of beautiful appearance can be obtained.

## Claims

1. A process for producing a container covered with a cylindrical heat shrinking film which comprises transferring a container intermittently to a horizontal direction by a one-pitch movement, disposing a cylindrical heat shrinking film around periphery of the container, holding the cylindrical heat shrinking film at a specific position in relation to the container, and allowing the cylindrical heat shrinking film to shrink by heating, wherein
the process of disposing a cylindrical heat shrinking film around periphery of the container comprises
(1) a stage which comprises transferring a continuous cylindrical heat shrinking film by film transfer rollers past outside of a first float which is held by the film transfer rollers, transferring the continuous cylindrical heat shrinking film by the film transfer rollers to a position at an outside of a second float which is held by film transfer belts, cutting the continuous cylindrical heat shrinking film with a cutter disposed at a position between the first float and the second float, transferring a cylindrical heat shrinking film produced by the cutting and opened by the second float by the film transfer belts, and disposing the cylindrical heat shrinking film at a position around periphery of the container which has been transferred to a position directly under the second float by a one-pitch movement,
(2) a stage which comprises pulling up the cylindrical heat shrinking film by a chuck for pulling up a film, and
(3) a stage which comprises forming a heat shrinking bag film by cutting and sealing an upper part of the cylindrical heat shrinking film by heat in a shape of an arc with a sealer cutter;
the process of holding the cylindrical heat shrinking film at a specific position in relation to the container comprises
(4) a stage which comprises pulling down the heat shrinking bag film by rollers for pulling down a film until the sealed part of the heat shrinking bag film is brought in contact with an upper part of the container, and
(5) a stage which comprises bringing a lower part of the heat shrinking bag film tightly in contact with a bottom part of the container by allowing the film to shrink by heating the lower part of the film alone; and
the process of allowing the cylindrical heat shrinking film to shrink by heating comprises
(6) a stage which comprises bringing the whole part of the heat shrinking bag film tightly in contact with approximately the whole surface of the container by heating the whole part of the heat shrinking bag film.

2. A process for producing a container covered with a cylindrical heat shrinking film according to Claim 1, wherein the continuous cylindrical heat shrinking film is produced and supplied continuously by a process comprising
(a) folding a continuous sheet of a heat shrinking film supplied from a roll continuously to make a double layer sheet,
(b) moving the double layer sheet continuously,
(c) clamping the double layer sheet at an initial position with a film clamp and a clamp receiver which both make a reciprocal movement,
(d) sealing an open side of the double layer sheet and cutting the remaining edge of the double layer sheet by heat while a linear heat sealing bar, the film clamp, and the clamp receiver move to a final position in a manner synchronized with the movement of the double layer sheet,
(e) releasing the double layer sheet from the film clamp and the clamp receiver, and
(f) returning the heat sealing bar, the clamp, and the clamp receiver to the initial position.

3. A process for producing a container covered with a cylindrical heat shrinking film according to Claim 2, wherein the remaining edge of the double layer sheet formed in the process (d) is detached from the double layer sheet by an upward or downward movement of a scrap receiver having an opening with suction, immediately before the heat sealing bar, the film clamp, and the clamp receiver reach the final position.

4. A process for producing a container covered with a cylindrical heat shrinking film according to Claim 1, wherein, in the process of disposing the cylindrical heat shrinking film at a position around periphery of the container in stage (1), an upper part of the container is inserted into the cylindrical heat shrinking film opened by the second float by pushing up the container with a plunger.

5. A process for producing a container covered with a cylindrical heat shrinking film according to Claim 1, wherein the process for producing a container covered with a cylindrical heat shrinking film further comprises forming a small vent hole at an upper part of the heat shrinking bag film and forming a perforation for removing the film at a lower part of the heat shrinking bag film.

6. A process for producing a container covered with a cylindrical heat shrinking film according to Claim 1, wherein, in stage (3), the cylindrical heat shrinking film is held between a film holding plate and a receiving plate which face each other, and cut and sealed by heat to a shape fitting the shape of a top part of the container with a heat cutting and sealing blade having a shape of an arc fitting the shape of the top part of the container.

7. A process for producing a container covered with a cylindrical heat shrinking film according to Claim 6, wherein a scrap piece formed by the cutting and sealing of the film by heat is clamped and detached by an apparatus for detachment and removed by suction or air blowing, simultaneously with the cutting and sealing of the film by heat.

8. A process for producing a container covered with a cylindrical heat shrinking film according to Claim 1, wherein stage (1) comprises transferring the container to a position directly under the second float in an upright condition, stage (4) comprises extending a lower part of the heat shrinking bag film from a bottom part of the container when the heat shrinking bag film is pulled down until the sealed part of the heat shrinking bag film is brought in contact with an upper part of the container, stage (5) comprises allowing the lower part of the heat shrinking bag film extended from the bottom part of the container alone to shrink by a partial heating apparatus, and stage (6) comprises allowing the whole part of the heat shrinking bag film to shrink completely by heating the whole part of the heat shrinking bag film while the container is held in the upright condition.

9. An apparatus for producing a container covered with a cylindrical heat shrinking film which comprises film transfer rollers which transfer a continuous cylindrical heat shrinking film to a second float, a first float which is held by the film transfer rollers, a film cutter which cuts the continuous cylindrical heat shrinking film, film transfer belts which open and transfer a cylindrical heat shrinking film prepared by the cutting to periphery of a container, the second float which is held by the film transfer belts, a chuck for pulling up a film which pulls up the cylindrical heat shrinking film, a sealer cutter which cuts and seals an upper part of the cylindrical heat shrinking film by heat to a shape of an arc and forms a heat shrinking bag film, rollers for pulling down a film which pull down the cylindrical heat shrinking film and bring the heat sealed part of the heat shrinking bag film into contact with an upper part of the container, a partial heating apparatus which heats a lower part of the heat shrinking bag film alone to allow the heat shrinking bag film to shrink and brings the film tightly into contact with a bottom part of the container, and a heating apparatus which heats the whole part of the container to allow the whole part of the heat shrinking bag film to shrink and brings approximately the whole film tightly into contact with the container.

10. An apparatus for producing a container covered with a cylindrical heat shrinking film according to Claim 9, wherein the apparatus for producing a container further comprises, before the elements described in Claim 9,
(a) a mechanism for folding a continuous sheet of a heat shrinking film supplied from a roll continuously to make a double layer sheet,
(b) a mechanism for moving the double layer sheet continuously,
(c) a mechanism for clamping the double layer sheet at an initial position with a film clamp and a clamp receiver which both make a reciprocal movement,
(d) a mechanism for sealing an open side of the double layer sheet and cutting the remaining edge of the double layer sheet by heat while a linear heat sealing bar, the film clamp, and the clamp receiver move to a final position in a manner synchronized with the movement of the double layer sheet,
(e) a mechanism for releasing the double layer sheet from the film clamp and the clamp receiver, and
(f) a mechanism for returning the heat sealing bar, the clamp, and the clamp receiver to the initial position.

11. An apparatus for producing a container covered with a cylindrical heat shrinking film according to Claim 10, wherein the apparatus for producing a container comprises a scrap receiver having an opening with suction which detaches the remaining edge of the double layer sheet formed by cutting the double layer sheet with the mechanism (d) by an upward or downward movement immediately before the heat sealing bar, the film clamp, and the clamp receiver reach the final position.

12. An apparatus for producing a container covered with a cylindrical heat shrinking film according to Claim 9, wherein the sealer cutter holds the cylindrical heat shrinking film between a film holding plate and a receiving plate which face each other, and cuts and seals by heat to a shape fitting the shape of a top part of the container with a heat sealing blade having a shape of an arc fitting the shape of the top part of the container.

13. An apparatus for producing a container covered with a cylindrical heat shrinking film according to Claim 12, wherein the sealer cutter further comprises an apparatus for detachment which clamps and detaches a scrap piece formed by the cutting and sealing of the film by heat and removes the scrap piece by suction or air blowing, simultaneously with the cutting and sealing of the film by heat.

14. An apparatus for producing a container covered with a cylindrical heat shrinking film according to Claim 12, wherein the film holding plate for holding the cylindrical heat shrinking film and the heat sealing blade are disposed on the same base plate which is moved by a cylinder.

15. An apparatus for producing a container covered with a cylindrical heat shrinking film according to Claim 12, wherein the heat sealing blade is fixed to a supporting block in which a heater for heating the heat sealing blade is disposed in a form buried therein.

16. An apparatus for producing a container covered with a cylindrical heat shrinking film according to Claim 12, wherein the film holding plate has an apparatus for cooling.

17. An apparatus for producing a container covered with a cylindrical heat shrinking film according to Claim 12, wherein the receiving plate which is faced to the film holding plate and the heat sealing blade has rubber, paper, or teflon attached to the surface thereof.
